Europäisches Patentamt

European Patent Office

Office européen des brevets

(19)

(11) Publication number: **0 081 133**

**A1**

(12) **EUROPEAN PATENT APPLICATION**

(21) Application number: **82110784.4**

(22) Date of filing: **22.11.82**

(51) Int. Cl.³: **H 02 M 7/48**

(30) Priority: **24.11.81 JP 186815/81**

(43) Date of publication of application:
**15.06.83 Bulletin 83/24**

(84) Designated Contracting States:
**CH DE FR GB IT LI NL SE**

(71) Applicant: **Hitachi, Ltd.**
**5-1, Marunouchi 1-chome**
**Chiyoda-ku Tokyo 100(JP)**

(72) Inventor: **Honbu, Mitsuyuki**
**4851-46, Nakane**
**Katsuta-shi Ibaraki-ken(JP)**

(72) Inventor: **Matsuda, Yasuo**
**1047-189, Moriyama-cho**
**Hitachi-shi Ibaraki-ken(JP)**

(72) Inventor: **Suzuki, Katsunori**
**1369-2, Shimana**
**Takahagi-shi Ibaraki-ken(JP)**

(74) Representative: **Strehl, Peter et al,**
**Strehl, Schübel-Hopf, Schulz Patentanwälte**
**Widenmayerstrasse 17 Postfach 22 03 45**
**D-8000 München 22(DE)**

(54) **Current-type inverter.**

(57) A current-type inverter having a bridge circuit which converts d.c. power into a.c. power of a desired frequency, the d.c. power being supplied from a variable d.c. power source (12) to an induction motor (16) via a reactor (10) which works to smooth the electric current. The bridge circuit comprises gate-turn off diodes (18...28) which are rendered conductive or non-conductive responsive to signals fed to control electrodes thereof. The d.c. terminals of the bridge circuit are connected to the variable d.c. power source (12) and the reactor (10), and capacitors (30...34) are connected across the a.c. terminals of the bridge circuit.

FIG. 1

EP 0 081 133 A1

## CURRENT-TYPE INVERTER

Background of the Invention

The present invention relates to a current-type inverter, and in particular to a current-type inverter which makes use of self-extinguishing elements.

In a conventional current type inverter employing thyristors, a d.c. reactor is connected to a variable voltage d.c. power source, and the current flowing through the d.c. source is smoothed. The d.c. power source is capable of controlling the value of the electric current flow into an inverter. The inverter converts d.c. power supplied from the d.c. power source into a.c. power of any desired frequency. A load is connected to the current-type inverter.

The d.c. power source may obtain a direct current from the commercial power supply through a converter consisting of thyristors, or may obtain the direct current from a d.c. power source having a constant voltage via a chopper circuit. The load, in general, may be an a.c motor such as an induction motor or synchronous motor.

The inverter consists of six thyristors, six diodes connected in series to the thyristors, six commutating capacitors for extinguishing the arc of the thyristors, six reactors for restraining the increase of current that flows into the thyristors during the commutation, d.c. power sources for supplying predetermined electric charge to the commutation capacitors when the inverter is to be operated, two thyristors which control the timings for supplying electric charge for starting the operation, and two reactors for restraining the electric current at the time when the electric charge for starting is to be supplied to the commutating capacitors.

The conventional inverter which makes use of thyristors as switching elements, requires six commutating capacitors, six reactors for restraining the increase of current during the commutation, d.c. power sources for supplying predetermined electric charge to the commutating capacitors at the time when the inverter is to be operated, two thyristers, and reactors. Consequently, the circuit setup becomes complicated.

Further, the commutating capacitors must have large capacity to not only commutate the currents of thyristors but also to cope with the reactive power required by the load and to absorb surge voltage which is produced by the energy stored in the inductance of the load during the commutation. Further, since a load current flows during the commutation, the capacitors must have large current capacity. This results in an increase in the volume of capacitors.

If, the currents $i_a$, $i_b$ and $i_c$ which flow into the load consist of square waves of a width of $120^o$, the current waves contain fifth, seventh, and higher harmonics. Therefore, when the load is an electric motor, the torque produced by the motor undergoes pulsation, giving rise to the occurrence of resonance phenomena in the mechanical system. To avoid the occurrence of resonance phenomena in the mechanical system, attempts have been made to reduce harmonics by controlling the output current of the inverter, i.e., by controlling the load current by pulse-width modulation. To effect the control by pulse-width modulation, the thyristors must be commutated many times responsive to the operation period of the inverter. The commutation operation of thyristors in the current-type inverter can be divided into two, i.e., delay time of conductivity from the moment when the thyristor is turned off to the moment when the electric current starts to flow to the next phase, and overlapping period of commutation from the moment when the current starts to flow to the next phase to the moment when the current is completely transferred to the next phase. The time required for commutation usually ranges from 100 μs to about 1 ms , though it varies depending upon the magnitude of the load current and the power factor of the load. In the conventional inverters, therefore, the pulse width-modulated waveforms can be obtained only when the output frequency of the inverter is in a range of several hertz. The occurrence of resonance phenomena in the mechanical system due to the pulsation of torque can be avoided only within a very narrow range. Further, since extended periods of time are necessary for commutation, the upper limit of about 200 Hz is imposed on the output frequency of the inverter even when the output current assumes the form of square waves of $120^{\circ}$. Accordingly, the inverter is not suited for loads that require high-frequency operation (high-speed operation in the case of an electric machine).

In the conventional inverter mentioned above, the construction tends to become complicated, and commutating capacitors having large capacity are required. Therefore, the apparatus tends to become bulky and expensive. Further, since extended periods of time are required for the commutation, the pulse width modulation can be effected within only a very narrow range to improve waveforms of the output current. Moreover, the upper limit of the output frequency is not high.

## Summary of the Invention

The present invention is to eliminate the above-mentioned problems, and its object is to provide a current-type inverter which has a simply constructed circuit setup, which can be constructed in a small size and with a reduced weight, and which makes it possible to effect the control by pulse width modulation up to high-frequency regions.

In order to accomplish the above-mentioned object, the invention deals with a current type inverter in which a bridge circuit is constituted by self-extinguishing elements which can be rendered conductive and non-conductive responsive to the signals fed to the control electrodes thereof, the d.c. terminals of the bridge circuit are connected to a variable d.c. power source and to a reactor which smoothes the current, and capacitors are connected across the a.c. terminals of the bridge circuit. Therefore, the capacitors connected across the a.c. terminals of the bridge circuit absorb surge voltage produced by the inductance that exists in the paths from the self-extinguishing elements to the load.

## Brief Description of the Drawings

Fig. 1 is a circuit diagram illustrating an embodiment of the present invention;

Fig. 2 is a diagram of current waveforms for illustrating the operation of the above embodiment;

Fig. 3 is a circuit diagram illustrating another embodiment of the present invention; and

Fig. 4 is a circuit diagram illustrating further embodiment of the present invention.

Detailed Description of the Preferred Embodiments

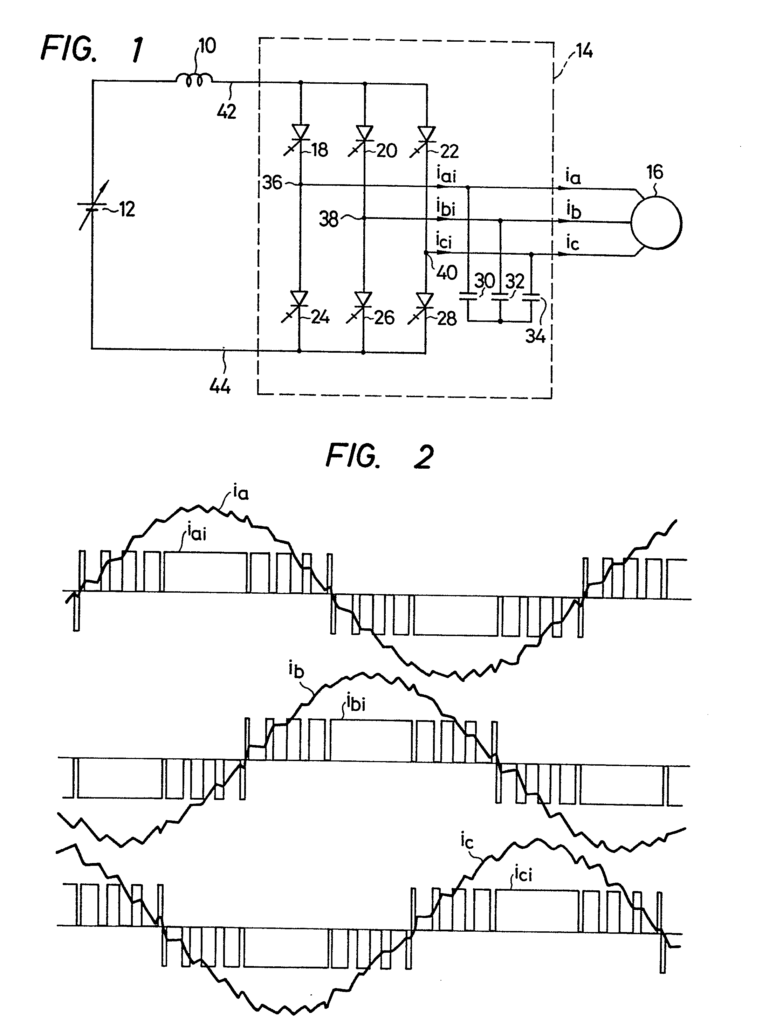

Fig. 1 shows a circuit diagram which illustrates a embodiment of the present invention. A d.c. reactor 10 is connected to a variable voltage d.c. power source 12, and the current flowing through the d.c. source is smoothed. The d.c. power source 12 is capable of controlling the value of the electric current flowing into an inverter 14.The inverter 14 converts d.c. power supplied from the d.c. power source 12 into a.c. power of any desired frequency. A load 16 is connected to the current-type inverter 14.

The d.c. power source 12 may obtain a direct current from the commercial power supply through a converter consisting of thyristors, or may obtain the direct current from a d.c. power source having a constant voltage via a chopper circuit. The load 16, in general, may be an a.c motor such as an induction motor or synchronous motor.

A bridge circuit is made up of self-extinguishing elements 18 to 28 which are connected in bridge and which can be turned on and off upon receipt of signals through the gates thereof. Y-connected capacitors 30 to 34 are connected across the a.c. terminals 36 to 40 on the a.c. output side of the bridge circuit. Here, these capacitors 30 to 34 may be connected in △-connection. Further, one d.c. terminal 42 of the bridge circuit is connected to the d.c. power source 12 and the other d.c. terminal 44 is connected to the d.c. reactor 10.

Operation of the embodiment will be described below. The following description deals with the case when the inverter operates to produce currents having waveforms which are $120^\circ$ wide. Output currents of the inverter commutate in the order of self-extinguishing elements $18{\to}20{\to}22 {\to}18$ -----, $24{\to}26{\to}28{\to}24$ ------. Commutation is now considered from the self-extinguishing element 18 to the self-extinguishing element 20. That is, consideration is given to the case when the self-extinguishing element 18 which is conductive is to be rendered non-conductive and the self-extinguishing element 20 which is non-conductive is to be rendered conductive. Since the self-extinguishing element 20 is turned on as the self-extingushing element 18 is turned off, the electric current which had been flowing into the d.c. reactor 10 is commutated from the self-extinguishing element 18 to the self-extinguishing element 20, and is allowed to flow to the load 16. Therefore, the voltage surge is not produced by the energy which is accumulated in the d.c. reactor 10. In this case, however, the voltage surge is produced by the energy which is accumulated in the inductance which exists in a path between the self-extinguishing element 18 and the load 16. The capacitors 30 to 34 connected to the output terminals 36 to 40 of the bridge circuit, however, absorb the voltage surge that is produced by the inductance. The same holds true during the commutation between other pairs of self-extinguishing elements.

The reactive power, on the other hand, must be supplied to the load 16. It is, however, allowed to supply the effective power only to the load 16 via the d.c. power source 12 and the d.c. reactor 10. The reactive power must be supplied through the capacitors 30 to 34.

The capacitors 30 to 34 according to this embodiment need have a current capacity that meets the reactive current required by the load 16, which is small compared with the current capacity that corresponds to the load current. The capacitors 30 to 34, further, need have a small capacity to cope with pulse currents. Compared with the conventionally used commutation capacitors, therefore, the capacitors used in this embodiment need have a small current capacity, so that the inverter is constructed in a reduced size.

The inverter according to this embodiment fundamentally consists of a total of nine parts, i.e., six self-extinguishing elements 18 to 28 and three capacitors 30 to 34, which is simple compared with the conventional inverter which consists of a total of 30 parts, i.e., eight thyristors, six diodes, eight reactors, six capacitors and two d.c. power sources. Consequently, the size of the inverter can be reduced.

Fig. 2 illustrates waveforms of output currents of the inverter when the self-extinguishing elements 18 to 28 are controlled by modulating the pulse widths. Waveforms of currents $i_{ai}$, $i_{bi}$ and $i_{ci}$ on the input side of the capacitors 30 to 34 are the same as the waveforms of output currents of the conventional inverter. However, waveforms of currents $i_a$, $i_b$ and $i_c$ on the output side of the capacitors 30 to 34 contain harmonic components in reduced amounts compared with the waveforms of currents $i_{ai}$, $i_{bi}$, and $i_{ci}$ owing to the function of the capacitors 30 to 34. When the load 16 is an electric motor, therefore, pulsation of the torque is reduced, and losses are reduced, too.

According to the embodiment of the present invention which also employs self-extinguishing elements having blocking ability in the reverse direction, such as GTO's and thyristors of the type of electrostatic induction, the time required for the commutation can be shortened compared with the conventional inverter, and the output frequency of the inverter can be increased. Therefore, waveforms of the output current can be improved up to a range of increased frequencies by modulating pulse widths, and the electric motor can be operated up to a region of high speeds restraining the pulsation of torque.

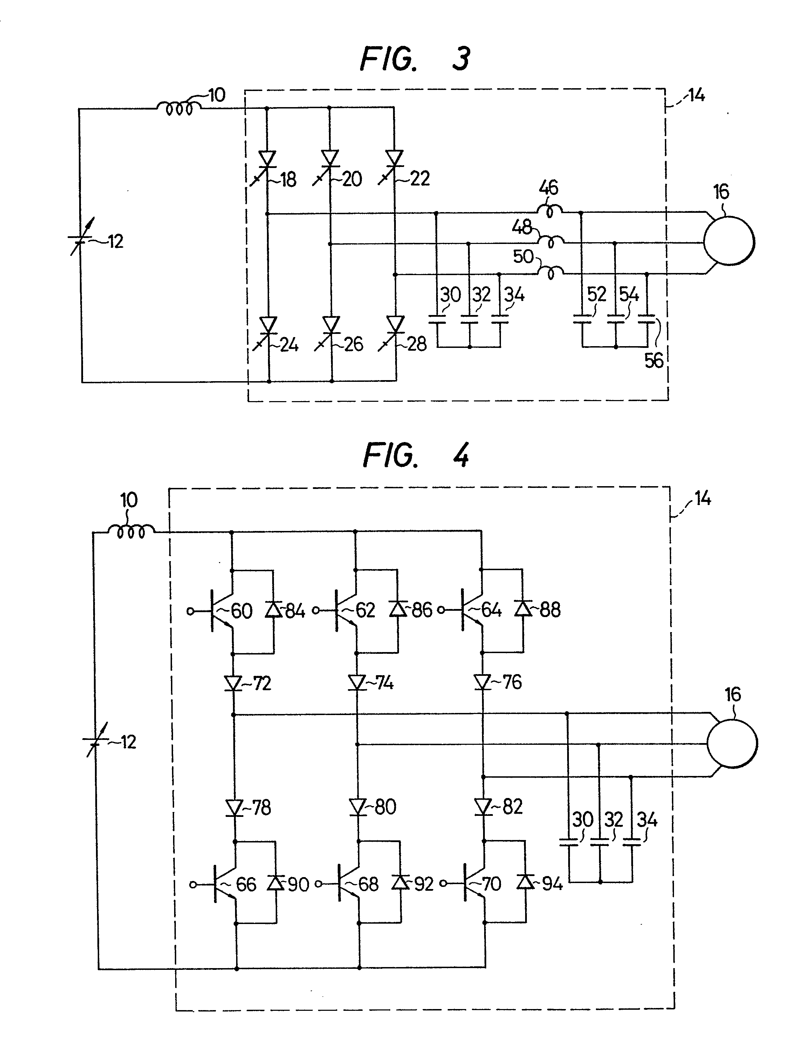

Fig. 3 illustrates another embodiment of the present invention, in which the portions corresponding to those of Fig. 1 are denoted by the same reference numbers. According to this embodiment, filters are connected between the load 16 and the capacitors 32 to 34. Namely, reactors 46 to 50 are connected between the load 16 and the capacitors 30 to 34, and Y-connected capacitors 52 to 56 are connected between the reactors 46 to 50 and the load 16. These reactors 46 to 50 and the capacitors 52 to 56 work as filters.

According to this embodiment, current flowing into the load 16, i.e., output current of the inverter contains harmonic components in further reduced amounts, and pulsation of torque, losses and noise are further reduced.

Fig. 4 is a circuit diagram which illustrates another embodiment of the present invention. This embodiment employs self-extinguishing elements without blocking ability in the reverse direction, i.e., employs transistors or field effect transistors.

As illustrated in Fig. 4, the inverter according to this embodiment consists of transistors 60 to 70, diodes 72 to 82 which are connected to the emitters of the transistors 60 to 70 to compensate the lack of blocking ability of the transistors 60 to 70 in the reverse direction, diodes 84 to 94 which are connected across the collectors and emitters of the transistors 60 to 70 to prevent them from being destroyed when an inverse voltage is applied, and Y-connected capacitors 30 to 34 that are connected to the output terminals 36 to 40 of the bridge circuit in the same manner as mentioned above.

The diodes 84 to 94 may have small capacities since very small current flows thereto. The diodes 84 to 94 may be those which are incorporated in the transistors or in the field effect transistors in parallel therewith but in reverse direction. Compared with the embodiment of the invention shown in Fig. 1, this embodiment requires diodes 72 to 82, i.e., requires an increased number of parts. Using the transistors or the field effect transistors, however, the switching frequency can generally be increased compared with the inverter which uses GTO's or thyristors of the type of electrostatic induction. Accordingly, the number of pulses can be increased for the pulse width modulation, harmonic components in the output current of the inverter can be further reduced, and the control by pulse width modulation can be effected up to a region of higher frequencies. This embodiment can of course be combined with the second embodiment.

The above description has dealt with an inverter having three-phase output. The invention, however, should in no way be limited thereto, but can be applied to the inverter having a single-phase output and to the inverters having outputs of three or more phases.

According to the present invention as illustrated in the foregoing, the inverter can be realized in a reduced size and at a reduced weight. Moreover, the output frequency of the inverter can be reduced, and harmonic components in the output current of the inverter can be reduced, enabling the control by pulse width modulation to be effected to a region of higher frequencies.

CLAIMS:

1. A current-type inverter including a bridge circuit which converts d.c. power into a.c. power of a desired frequency, the d.c. power being supplied from a variable d.c. power source (12) to a load (16) via a reactor (10) which works to smooth the electric current, the bridge circuit comprising self-extinguishing elements (18...28; 60...70) which are rendered conductive or non-conductive responsive to signals input to control electrodes thereof, the d.c. terminals of the bridge circuit being connected to the variable d.c. power source (12) and the reactor (10), and capacitors (30...34) being connected across the a.c. terminals of the bridge circuit.

2. The inverter of claim 1, wherein said self-extinguishing elements (18...28) are either gate-turn-off diodes or static inductive thyristors.

3. The inverter of claim 1, wherein said self-extinguishing elements (60...70) do not have blocking ability in the reverse direction and are equipped with diodes (72...82) connected in series and with diodes (84...94) connected in parallel but in reverse direction.

**0081133**

4. The inverter of any of claims 1 to 3, wherein the bridge circuit includes filtering reactors (46...50) connected between the load (16) and said capacitors (30...34), and Y-connected filtering capacitors (52...56) connected between said reactors (46...50) and the load (16).

FIG. 1

FIG. 2

0081133

1/2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | H 02 M 7/48 |
| Y | ELEKTRISCHE BAHNEN, vol. 48, no. 4, 1977 W. LÖSSEL "Drehstromantrieb für Wechselstromtrieb-fahrzeuge" pages 82-89 * Page 83, paragraph 3 - page 84, left-hand column, paragraph 1; figures 2b, 3 * | 1,2 | |
| | --- | | |
| Y | CH-A- 493 955 (ELIN-UNION) * Column 2, lines 8-32 * | 1,2 | |
| | --- | | |
| Y | GB-A-1 424 637 (BROWN BOVERI & CIE.) * Page 1, line 96 - page 2, line 46 * | 1,2 | |
| | --- | | |
| A | DE-A-2 924 729 (LICENTIA) * Page 8, last paragraph - page 9, paragraph 1 * | | TECHNICAL FIELDS SEARCHED (Int. Cl. 3) H 02 M 1/00 H 02 M 5/00 H 02 M 7/00 |
| | --- | | |
| A | US-A-4 039 926 (R.L. STEIGERWALD) * Column 2, line 27 - column 3, line 5 * | | |
| | ----- | | |

The present search report has been drawn up for all claims

| Place of search BERLIN | Date of completion of the search 16-02-1983 | Examiner GESSNER E A F |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82